Europäisches Patentamt

European Patent Office

Office européen des brevets

(11) Veröffentlichungsnummer: **0 365 902**

**A2**

## (12) EUROPÄISCHE PATENTANMELDUNG

(21) Anmeldenummer: 89118692.6

(22) Anmeldetag: 07.10.89

(51) Int. Cl.⁵: **C08G 18/08 , C08L 75/04 , C14C 9/00 , D06M 15/00**

(30) Priorität: 22.10.88 DE 3836030

(43) Veröffentlichungstag der Anmeldung:
02.05.90 Patentblatt 90/18

(84) Benannte Vertragsstaaten:
**AT BE DE ES FR GB IT NL**

(71) Anmelder: **BAYER AG**

**D-5090 Leverkusen 1 Bayerwerk(DE)**

(72) Erfinder: **Thoma, Wilhelm, Dr.**
**Birkenweg 25**
**D-5090 Leverkusen 3(DE)**
Erfinder: **Langel, Rolf**
**Blütenstrasse 21**
**D-5090 Leverkusen 3(DE)**
Erfinder: **Schröer, Walter, Dr.**
**Nicolai-Hartmann-Strasse 29**
**D-5090 Leverkusen 1(DE)**

(54) **PUR-Dispersionen und Lösemittel enthaltende Beschichtungsmassen und deren Verwendung zur Herstellung von wasserdampfdurchlässigen PUR-Beschichtungen.**

(57) Beschichtungsmassen, die

a) 20 bis 90 Gew.-% 20 bis 60 gew.-%ige wäßrige Dispersionen von Polyurethanen mit end- und/oder seitendständigen Carboxylat- und/oder Sulfonat-Gruppen und/oder Polyetherketten mit Oxyethylen-Einheiten,

b) 0,1 bis 5 Gew.-% wasserlösliche, polymere Nicht-Polyurethane, die frei von Carboxyl-Gruppen sind, als Vedicker für PUR-Dispersionen,

c) 3 bis 80 Gew.-% mit Wasser nicht mischbare organische Lösemittel mit Siedepunkten/-bereichen bis 250° C, bevorzugt bis 220° C, als Nichtlöser für die in Wasser dispergierten Polyurethane,

d) 0,1 bis 5 Gew.-% isocyanatgruppenfreie Vernetzer für die in Wasser dispergierten Polyurethane,

e) 0,1 bis 5 Gew.-% hydrophile Polyisocyanate als Haftvermittler zum Substrat und als Vernetzer der Polyurethane in den PUR-Dispersionen und gegebenenfalls übliche Beschichtungshilfsmittel und -zusatzstoffe enthalten, wobei die Summe der Prozentanteile a) + b) + c) + d) + e) 100 beträgt, eignen sich insbesondere zur Herstellung von wasserdampfdurchlässigen Beschichtungen auf Textil-oder Ledersubstraten.

## PUR-Dispersionen und Lösemittel enthaltende Beschichtungsmassen und deren Verwendung zur Herstellung von wasserdampfdurchlässigen PUR-Beschichtungen

Die Erfindung betrifft PUR-Dispersionen und Lösungsmittel enthaltende Beschichtungsmassen (Streichpasten) sowie deren Verwendung zur Herstellung von wasserdampfdurchlässigen ("mikroporösen") PUR-Beschichtungen, vorzugsweise auf Textil- oder Ledersubstraten im Direkt-oder Transferverfahren nach dem Prinzip der Verdampfungskoagulation.

Unter dem Begriff Polyurethan(e) (PUR) sind im Rahmen der vorliegenden Erfindung auch Polyurethanharnstoffe zu verstehen; dies gilt auch beim Auftreten dieses Begriffs in Wortverbindungen.

Beschichtungen, insbesondere Textil- oder Lederbeschichtungen, die eine hohe Durchlässigkeit für Wasserdampf aufweisen und zugleich eine hohe Wasserdichtigkeit besitzen, sind, vor allem auf dem Bekleidungs- und Schuh-Sektor, von zunehmendem Interesse.

Der Vorteil solchermaßen beschichteter Materialien ist, daß die daraus hergestellte Bekleidung einerseits optimal gegen Wasser schützt, andererseits aber die Körperfeuchtigkeit in Form von Wasserdampf entweichen läßt Diese Eigenschaften haben sowohl in gesundheitlicher und hygienischer Hinsicht als auch im Hinblick auf den Tragekomfort einen hohen Stellenwert.

Ein wichtiges Verfahren, mikroporöse und somit wasserdampfdurchlässige Beschichtungen zu erzeugen, ist das der sogenannten Badkoagulation, wie es zum Beispiel in der DE-AS 1 270 276 und DE-AS 1 769 277 beschrieben ist. Dabei wird ein Substrat mit einem in einem organischen Lösungsmittel gelösten Polyurethan oder Polyurethanharnstoff beschichtet und das beschichtete Produkt in ein Bad aus einem mit dem Lösungsmittel mischbaren Nichtlösungsmittel (z.B. Wasser) geführt. Die Koagulation des Polyurethans erfolgt durch die Extraktion des Lösungsmittels durch den Nichtlöser.

Die Nachteile dieses Verfahrens bestehen darin, daß zur erforderlichen vollständigen Entfernung des Lösungsmittels sehr große Mengen Nichtlöser benötigt werden und daß das Verfahren langwierig ist. Außerdem sind zur Durchführung dieses Verfahrens wie auch zur Aufarbeitung der dabei anfallenden Lösungsmittel-/Nichtlösungsmittelgemische spezielle, relativ aufwendige Apparaturen erforderlich.

Es hat daher nicht an Versuchen gefehlt, wasserdampfdurchlässige Beschichtungen auf konventionellen Textil beschichtungsmaschinen herzustellen. Die meisten dieser Versuche beschreiten den Weg der sogenannten Verdampfungskoagulation. Dieses Verfahren wird im Prinzip so durchgeführt, daß einem, in einem flüchtigen Lösungsmittel gelösten Polymeren eine gewisse Menge eines weniger flüchtigen Nichtlösungsmittels beigemischt wird und die so entstandene Lösung, Dispersion oder Suspension auf ein Substrat gestrichen wird. Die Beschichtung wird durch schonendes Erhitzen getrocknet, wobei zunächst bevorzugt das flüchtige Lösungsmittel verdampft. Die Folge ist, daß das Polymere in der Schicht koaguliert und nach endgültiger Trocknung eine mikroporöse Struktur aufweist.

Diese Verfahrensweise ist z.B. in DE-PS 1 694 059 beschrieben; dabei werden Polyurethane eingesetzt, die in flüchtigen organischen Lösungsmitteln, wie z.B. Tetrahydrofuran oder Methylethylketon kolloidal gelöst sind und mit organischen Nichtlösungsmitteln höherer Verdunstungszahl, z.B. Waschbenzin, vermischt werden.

Eine ähnliche Verfahrensweise ist in der CH-PS 481 971 beschrieben, mit der Erweiterung, daß dort unter den, den Polymerlösungen zuzusetzenden Nichtlösungsmitteln auch Wasser genannt wird. Ein weiteres Beispiel dieser Art stellt das Verfahren gemäß DE-PS 2 004 276 dar. Hier werden hydrophile Polyurethane auf Basis aromatischer Diisocyanate eingesetzt, die bestimmte Anteile an Polyoxyethylenverbindungen als Aufbaukomponenten enthalten. Lösungen dieser Polyurethane in bestimmten organischen Lösungsmitteln, wie z.B. Methylethylketon, werden mit Wasser als Nichtlösungsmittel vermischt und auf ein Substrat aufgetragen, worauf die Beschichtung durch selektive Verdampfung koaguliert und anschließend getrocknet wird.

Die genannten, nach dem Prinzip der Verdampfungskoagulation arbeitenden Verfahren weisen jedoch noch Mängel auf. Ein wesentlicher Nachteil besteht darin, daß die selektive Verdampfung der flüchtigeren Lösungsmittelanteile einer genauen Temperaturführung bedarf. Die Handhabung der entsprechenden Produkte auf den Beschichtungsmaschinen ist daher kompliziert und nur mit relativ geringer Fahrgeschwindigkeit möglich. Ein weiterer gravierender Nachteil, der insbesondere das erwähnte Verfahren gemäß DE-PS 2 004 276 betrifft, ist in der schwierigen Verarbeitbarkeit der dort beschriebenen Polyurethan-Lösungen bzw. -Suspensionen begründet. Obwohl der Festkörpergehalt niedrig ist, sind diese Produkte, sogar schon vor der erst zum Zeitpunkt der Applikationen stattfindenden Wasserzugabe, hochviskos. Sie werden als "schlammartige Suspensionen" beschrieben, neigen stark zu vorzeitiger Antrocknung mit Bildung von Gelteilchen und Stippen und sind daher vom Beschichter schlecht handzuhaben. Darüber hinaus haben die Beschichtungen gemäß letztgenannter Patentschrift den Nachteil mangelnder Lichtechtheit.

Es ist ferner bekannt (DE-OS 3 610 200), daß wäßrige Dispersionen von Carboxyl- und/oder Sulfonatgruppen tragenden PUR-Kunststoffen zusammen mit Nicht-Polyurethanharzen als Verdicker, welche seiten- und/oder endständig Carboxylgruppen enthalten, die zur Entfaltung ihrer Verdickerwirkung Ammoniak benötigen, und selbstvernetzenden Polysiloxanen mit in Wasser nicht mischbaren Lösemitteln mit Siedepunkten <170°C stabile Streichpasten ergeben, die sich auf herkömmlichen Beschichtungsmaschinen zu mikroporösen Beschichtungen verarbeiten lassen.

Die Erfindung betrifft Beschichtungsmassen (Streichpasten), die

a) 20 bis 90 Gew.-% 20 bis 60 gew.-%ige wäßrige Dispersionen von Polyurethanen mit end- und/oder seitendständigen Carboxylat- und/oder Sulfonat-Gruppen und/oder Polyetherketten mit Oxyethylen-Einheiten,

b) 0,1 bis 5 Gew.-% wasserlösliche, polymere Nicht-Polyurethane, die frei von Carboxyl-Gruppen sind, als Vedicker für PUR-Dispersionen,

c) 3 bis 80 Gew-% mit Wasser nicht mischbare organische Lösemittel mit Siedepunkten/-bereichen bis 250°C, bevorzugt bis 220°C, als Nichtlöser für die in Wasser dispergierten Polyurethane,

d) 0,1 bis 5 Gew.-% isocyanatgruppenfreie Vernetzer für die in Wasser dispergierten Polyurethane,

e) 0,1 bis 5 Gew.-% hydrophile Polyisocyanate als Haftvermittler zum Substrat und als Vernetzer der Polyurethane in den PUR-Dispersionen und gegebenenfalls übliche Beschichtungshilfsmittel und -zusatzstoffe enthalten, wobei die Summe der Prozentanteile a) + b) + c) + d) + e) 100 beträgt.

Vorzugsweise sind die als Komponente a) eingesetzten wäßrigen Dispersionen von PUR 35 bis 45 gew.-%ig.

Vorzugsweise enthalten die Beschichtungsmassen 25 bis 70 Gew.-% c) und/oder 1 bis 3 Gew.-% e).

Vorzugsweise enthalten die Beschichtungsmassen 40 bis 70 Gew.-% a).

Vorzugsweise haben die Beschichtungsmassen Viskositäten von 5000 bis 40 000 Mpa.s/25°C.

Überraschenderweise sind die erfindungsgemäßen Beschichtungsmassen stabil, gut handhabbar und gut streichbar (Luft- und auch Walzenrakel) und problemlos und mit Vorteil zur Herstellung von mikroporösen Beschichtungen mit guter Substrathaftung verwendbar.

Die Verwendung von carboxylgruppenfreien Verdickungsmitteln, die den Einsatz von Ammoniak erübrigen, führt (z.B. im Vergleich zu der aus der DE-OS 3 610 200 bekannten Arbeitsweise) zu einer erheblichen Verbesserung der Haftung, z.B. des Grundstriches zum Substrat, aber auch des nachfolgenden Striches auf dem Grundstrich. Die Verbesserung der Haftfestigkeit ist für die Gebrauchseigenschaften beschichteter Artikel, wie Chemischreinigung, Waschbarkeit, Scrubb-Test im trockenen wie vor allem im nassen Zustand, von ganz hervorragender Bedeutung.

Weiterhin zeichnet sich die Verwendung der erfindungsgemäßen Beschichtungszusammensetzungen durch eine Vergleichmäßigung der Porenbildung im Zuge der Verdampfungskoagulation aus, was zu hoher Wasserdampfdurchlässigkeit der mikroporösen Schichten von vorzugsweise 5 bis 10 mg/cm² .h nach IUP 15 (DIN 53 333) führt.

Die Erfindung betrifft weiterhin die Verwendung der oben gekennzeichneten Streichpasten zur Beschichtung von Substraten, vorzugsweise aus Textil oder Leder, im Direkt-oder Transferverfahren nach dem Prinzip der Verdampfungskoagulation.

Die Streichpasten werden vorzugsweise nach einem solchen Verfahren hergestellt, daß die Dispersionen der Polyurethane bzw. Polyurethanharnstoffe in Wasser durch Zusatz der wasserlöslichen, polymeren Nicht-Polyurethane verdickt werden und dann die mit Wasser nicht mischbaren organischen Lösemittel eingearbeitet werden, schließlich fügt man Vernetzer, Silicone und gegebenenfalls weitere Beschichtungshilfsmittel und -zusatzstoffe hinzu.

Besonders vorteilhaft ist es, in der PUR-Dispersion zunächst das mit Wasser nicht mischbare Lösemittel(gemisch) zu dispergieren. Dann fügt man eine Mischung aus Verdicker, Vernetzer und gegebenenfalls Beschichtungshilfsmittel und -zusatzstoffe hinzu und rührt nunmehr in die verdickte Zubereitung das wasserverträgliche Polyisocyanat ein.

Die PUR-Dispersionen a) werden in an sich bekannter Weise aus den üblichen Komponenten, wie höhermolekularen Polyhydroxylverbindungen, Polyisocyanaten und Kettenverlängerungsmitteln, hergestellt. Die Polyhydroxylverbindungen haben vorzugsweise Molekulargewichte von 400 bis 8000, vorzugsweise von 600 bis 5000. Insbesondere handelt es sich um zwei- und mehrwertige Hydroxypolyester, Hydroxypolylactone, Hydroxypolycarbonate, Hydroxypolyacetale, oder ihre Mischkondensate oder Mischungen. Als Poly-socyanate können zwei- oder mehrwertige aliphatische, cycloaliphatische, aromatische oder heterocyclische Polyisocyanate, vorzugsweise Diisocyanate, eingesetzt werden; bevorzugt sind aliphatische, cycloaliphatische und aromatische Diisocyanate.

Als Kettenverlängerer kommen z.B. Dialkohole und/oder Aminoalkohole und/oder Diamine bzw. ihre Bisketimine und/oder Hydrazinhydrat bzw. seine Ketazine in Betracht. Die Einbringung der Carboxylat-

EP 0 365 902 A2

und/oder Sulfonatgruppen und/oder Polyetherketten mit Oxyethylen-Einheiten erfolgt durch Mitverwendung entsprechender Verbindungen, die diese Gruppen oder Einheiten enthalten. Beispielhaft seien genannt: Oxyethylengruppen-haltige mono- oder polyfunktionelle Polyether, Dimethylolpropionsäure, Ethylendiamin-N-essigsäure, Ethylendiamin-N-propionsäure sowie die Alkalimetallsalze der genannten Säuren, sulfo natgruppen-haltige Polyamine, z.B. mit Ethylen-, Propylen- oder Butansulfon modifizierte Diamine, Sulfonatdiole wie sie aus der DE-OS 2 410 862 bekannt sind.

Herstellungsverfahren und (weiterhin) geeignete Ausgangskomponenten für die in a) eingesetzten Polyurethane sind z.B. aus folgenden Literaturstellen bekannt: DE-AS 1 097 678, DE-PS 1 184 946, DE-PS 1 178 586 (US-PS 3 756 912), DE-OS 1 237 306, DE-OS 1 495 745, DE-OS 1 595 602, DE-OS 1 770 068, DE-OS 1 913 271, DE-OS 2 019 324, DE-OS 2 314 512 (US-PS 3 905 329), DE-OS 2 811 148, DE-OS 2 320 719 (GB-PS 1 465 572), DE-OS 2 446 440, DE-OS 2 555 534, DE-OS 2 725 589, DE-OS 2 732 131, US-PS 4 192 937 sowie die entsprechenden Publikationen, z.B. D. Dieterich et al, Angew. Chem. 82, 53 (1970), Angew. Makromol. Chem. 76, 85 (1972) und 98, 133-165 (1981) und Progress in Organic Coatings 9, 281-340 (1981) bzw. die darin aufgeführten Literaturstellen. Es können auch OH-haltige Dispersionen eingesetzt werden, wie sie in der EP-A-122 552 auf Seiten 6 bis 14 beschrieben sind.

Besonders bevorzugt werden die in a) eingesetzten Polyurethane aus Polyhydroxyverbindungen vom Molgewicht 600 bis 5000, aliphatischen und/oder cycloaliphatischen und/oder aromatischen Polyisocyanaten, insbesondere Diisocyanaten, Polyalkoholen und/oder Polyaminen vom Molgewicht 62 bis 500 als Kettenverlängerer, wobei diese Kettenverlängerer mindestens eine Carboxylat- und/ oder Sulfonatgruppe und/oder eine Oxyethyleneinheiten enthaltende Polyetherkette tragen, hergestellt, wobei weiterhin bevorzugt pro Mol Polyhydroxyverbindungen 1,2 bis 5 Mol Polyisocyanate und 0,1 bis 4 Mol Kettenverlängerer eingesetzt werden, wobei 0,01 bis 4 Mol dieser Kettenverlängerer mindestens eine Carboxylat- und/oder Sulfonatgruppe und/oder eine Oxyethyleneinheiten enthaltende Polyetherkette aufweisen.

Wasserlösliche, polymere Nicht-Polyurethane nach b), frei von Carboxylgruppen, sind vorzugsweise Polyvinylpyrrolidon und/oder dessen Mischpolymere insbesondere mit (Meth)Acrylsäurealkylestern und/oder Polyalkylenglykole mit Molgewichten von 10 000 bis 500 000, bevorzugt 30 000 bis 100 000, vorzugsweise Polyethylenglykole.

Als mit Wasser nicht mischbare Lösemittel nach c) mit Siedepunkten bis 250°C, bevorzugt bis 220°C, besonders bevorzugt 170-220°C, dienen aliphatische und/oder aromatische Kohlenwasserstoffe, z.B. Benzinfraktionen, Gemische aus aromatischen Kohlenwasserstoffen von $C_9$-$C_{11}$-Produkten (Solvesso®100, Esso), ferner Toluol, Xylol, Mesitylen, Durol, Ethylbenzol u.a. und deren Gemische; niedere Fettsäureester, z.B. Ethylacetate, Butylacetate, Amylacetate, Ethoxyglykolacetate, Methoxypropylacetate, Ethylpropionat, Butylbutyrate und deren Gemische bzw. Gemische mit den genannten Kohlenwasserstoffen; aliphatische und cycloaliphatische Ketone, z.B. Methylisobutylketon, Ethylbutylketon, Dibutylketon, Cyclohexanon und deren Gemische bzw. Gemische mit den genannten Kohlenwasserstoffen und/oder Estern.

Als Vernetzer d) für die in den Streichpasten enthaltenen Polyurethane a) dienen beispielsweise Harnstoff- und Melamin-Formaldehydharze, Polyaziridine, Polyepoxide, blockierte Polyisocyanate und/oder Polycarbodiimide.

Beispielhaft genannt seien: Mit Methanol oder Butanolen ganz oder teilweise, vorzugsweise überwiegend veretherte Harnstoff- und Melamin-methylolharze, wie sie beispielsweise als Melamin-hexamethylolether, oder als formulierte Handelsprodukte der Hoechst AG unter der Bezeichnung Maprenal® MF 900, 910, 915, 920, 927, 800, 650, 700 und 750 oder als Cassurit® HML erhältlich sind; mit Ethylenimin oder Propylenimin umgesetzte Polyisocyanate, sog. Aziridinharnstoffe (s. z.B. DE-PS 1 152 161); Umsetzungsprodukte von Acrylsäureestern mehrwertiger Alkohole und Ethylenimin und/oder Propylenimin, z.B. Reaktionsprodukte von Trimethylolpropantriacrylat mit Propylenimin; Polyepoxide aus Bisphenol A und Epichlorhydrin oder Polyalkoholen und Epichlorhydrin, Polycarbodiimide aus z.B. Toluylendiisocyanat oder mit Butanonoxim oder Malonester blockierte Polyisocyanate wie sie in DE-OS 3 313 236, Beispiel 4 beschrieben sind.

Wasserverträgliche Polyisocyanate nach e), die als Haftvermittler und zusätzliche Vernetzer dienen, sind hydrophile Polyisocyanate, vorzugsweise aus aliphatischen und/oder cycloaliphatischen Polyisocyanaten, z.B. Hexandiisocyanat, Isophorondiisocyanat bzw. Isocyanurat-und Biuretpolyisocyanate daraus, umgesetzt mit EOX/POX-Polyethern (Polyethylenglykolen/Polypropylenglykolen), deren EOP-Anteil mindestens 50, bevorzugt mehr als 70 Gew.-% beträgt; NCO-Gehalt dieser hydrophilen Polyisocyanate beträgt vorzugsweise 5 bis 30 Gew.-%, besonders bevorzugt 15 bis 25 Gew.-%.

Als Beschichtungshilfsmittel und -zusatzstoffe können die Streichpasten z.B. Pigmente, Füllstoffe, Hydrophobierungsmittel, z.B. Fluorkohlenwasserstoffe, Licht- und Hydrolysestabilisatoren, Antioxidantien, Flammschutzmittel, Antistatika, Verlaufhilfsmittel, z.B. Silicone, Entschäumer, Griffmittel, fungizide und bakterizide Mittel und ähnliche, an sich bekannte Additive enthalten.

4

Beispiele

Beispiel 1

### 1.1. Herstellung der PUR-Dispersion

Ein getrocknetes Gemisch aus 1680 g eines Polytetramethylenglykol-Polyethers (OH-Zahl 56) und 21,4 g Dimethylolpropionsäure wird bei 60°C mit 297 g 1,6-Hexandiisocyanat vermischt und bei 100°C umgesetzt, bis der NCO-Gehalt des NCO-Prepolymeren 3,0 % beträgt. Dieses wird unter Kühlung in 3600 g Aceton gelöst.

Zur acetonischen Lösung des Prepolymeren tropft man eine wäßrige Lösung von 9,8 g Hydrazinhydrat und 49,6 g ethylendiamin-ß-ethyl-sulfonsaurem Natrium in 500 g Wasser. Nach Einrühren von weiteren 2700 g Wasser wird das Aceton im Vakuum abdestilliert. Man erhält eine wäßrige Dispersion mit ca. 40 % PUR-Feststoff.

### 1.2 Herstellung der Streichpaste/Grundstrich

625 g der PUR-Dispersion (1.1) werden mit 375 g eines Kohlenwasserstoffgemisches (Petroleum, Siedebereich 160 bis 250°C) verrührt. In diese PUR-Wasser/Petroleum-Dispersion werden 20 g einer Polyvinylpyrrolidon-Lösung (30 %ig in Wasser), 20 g einer 30%igen, wäßrigen, acetonhaltigen Dispersion eines Fluoralkylacrylat-Copolymers (Xeroderm® WF; Bayer AG), 10 g eines Melaminharzes (50 %ig in Wasser) und 30 g eines hydrophilen Polyisocyanates mit einem NCO-Gehalt von ca 20 % (Umsetzungsprodukt eines Biuretpolyisocyanats aus 1,6-Hexandiisocyanat mit Polyethylenglykol, OH-Zahl ca. 112) eingerührt.

Die Viskosität der Streichpaste beträgt ca. 10 000 mPa.s bei 25°C, bei einer Gesamtfeststoffkonzentration von ca. 27 %.

### 1.3 Herstellung der Streichpaste/Deckstrich

In 1000 g der unter 1.2 beschriebenen PUR-Wasser/Petroleum-Dispersion werden wie unter 1.2 20 g Polyvinylpyrrolidon-Lösung (®Collacral VL, BASF), 20 g einer 30%igen wäßrigen, acetonhaltigen Dispersion eines Fluoralkylacrylat-Copolymers (Xeroderm® WF, BAYER AG), 10 g Melaminharz (®ACRAFIX MF, BAYER AG) und 10 g eines hydrophilen Polyisocyanats mit einem NCO-Gehalt von ca. 20 % (Umsetzungsprodukt eines Biuretpolyisocyonats aus 1,6-Hexandiisocyanat mit Polyethylenglykol, OH-Zahl ca. 112) eingerührt. Darüber hinaus fügt man noch 10 g einer 50 %igen Lösung eines Polydimethylsiloxans (Molgewicht ca. 50 000) in Toluol hinzu.

Viskosität: ca. 8000 mPa.s/25°C

Konzentration: ca. 26 %

### 1.4 Direktbeschichtung auf PA-Gewebe

a) PA-Taft (ca. 80 g/m² Warengewicht) wird per Luftrakel mit der Grundstrichpaste 1.2 beschichtet. Kanaltemperatur für Trocknung und Kondensation 80/120/160°C, Auflage 10 g Feststoff/m².

Mit der Deckstrich-Streichpaste (1.3) wird per Walzenrakel (0,35 mm Rakelspalt) ein 2. Strich aufgebracht und analog getrocknet und kondensiert. Gesamtauflage: 50 g/m². Die weiche, mikroporöse Beschichtung ist wasserdampfdurchlässig und dicht.

| WDD nach DIN 53 333 | 8 mg/cm².h |
|---|---|
| Dichtigkeit (Wassersäule) | 1000 mm |
| Scrubb-Test (1000 Hübe) trocken/naß | ohne Beschädigung |

b) Auf die Beschichtung (1.4a) wird per Walzenrakel mit der Streichpaste (1.3) ein weiterer Strich gelegt; Gesamtauflage 70 g Feststoff/m².

| WDD nach DIN 53 333 | 7 mg/cm².h |
|---|---|
| Dichtigkeit (Wassersäule) | 1500 mm |
| Scrubb-Test (1000 Hübe) | ohne |
| trocken/naß | Beschädigung |

Der weiche, geschmeidige Beschichtungsartikel ist dicht gegen flüssiges Wasser und durchlässig gegen Wasserdampf; er ist knickecht bei Raumtemperatur und auch bei tiefen Temperaturen, z.ß. bei -30 bis -40° C.

Auch nach mehrfacher Wäsche und/oder Chemischreinigung ist der Artikel dicht und dampfdurchlässig.

## Beispiel 2

### 2.1 Herstellung der PUR-Dispersion

Ein getrocknetes Gemisch aus 1675 g eines Polyesters aus Hexandiol, Neopentylglykol und Adipinsäure (OH-Zahl 66) und 65 g eines monofunktionellen EOX/POX-Polyethers auf n-Butanol mit EOX/POX-Verhältnis 85:15 vom Molgewicht 2000 wird bei 60° C mit 185 g 1,6-Hexandiisocyanat und 244 g Isophorondiisocyanat vermischt und dann auf 100° C erhitzt, bis ein NCO-Gehalt von ca. 4,5 % erreicht ist. Dann löst man das Prepolymer in 4000 g Aceton. In die acetonische Lösung tropft man eine Lösung von 102 g Isophorondiamin und 23 g ethylendiamin-ß-ethyl-sulfonsaurem Natrium in 300 g Wasser. Nach Einrühren von weiteren 3500 g Wasser wird das Aceton im Vakuum abdestilliert. Man erhält eine wäßrige Dispersion mit ca. 40 % PUR-Feststoff.

### 2.2 Herstellung der Streichpaste/Grundstrich

600 g der PUR-Dispersion (2.1) wurden mit 400 g Sangajol® (Shell, Kohlenwasserstoffgemisch vom Siedebereich 140 bis 200° C) verrührt. In diese Zubereitung werden 20 g Polyvinylpyrrolidon-Lösung (30 %ig in Wasser), 20 g einer 30%igen wäßrigen, acetonhaltigen Dispersion eines Fluoralkylacrylat-Copolymers (Xeroderm® WF, Bayer AG), 20 g Polycarbodiimid (50 %ig in NMP) (®BAYDERM Fix PCL, Bayer AG.) und 30 g hydrophiles Polyisocyanat mit einem NCO-Gehalt von ca. 20 % (siehe unter 1.2) eingearbeitet.
Viskosität: ca. 10 000 mPa.s/25° C
Konzentration: ca. 27 %

### 2.3 Herstellung der Streichpaste/Deckstrich A) auf Dispersionsbasis

Zu 1090 g der Grundstrichpaste (2.2) fügt man 10 g einer 50 %igen Lösung eines Polydimethylsiloxans (Molgewicht ca. 50 000) in Toluol hinzu.
Viskosität: ca. 9000 mPa.s/25° C
Konzentration: ca. 27 %

### 2.4 Herstellung der Streichpaste/Deckstrich B) auf Lösungsbasis

Beispiel 5/II in DE-OS 3 522 464

### 2.5 Direktbeschichtung auf PES-Gewebe

a) Ein PES-Gewebe von ca. 110 g/cm² Warengewicht wird mit der Grundstrichpaste (2.2) per Walzenrakel, Spalt 0,2 mm, beschichtet. Trocknung und Vernetzung erfolgt bei 80/120/160° C; Auflage: 20 g Feststoff/m².

Der 2. Strich wird mittels Deckstrichpaste A) (2.3) ebenfalls per Walzenrakel aufgebracht und analog Grundstrich getrocknet und kondensiert. Spalt 0,3 mm. Gesamtauflage ca. 45 g/m².

| | |
|---|---|
| WDD nach DIN 53 333 | 8 mg/cm².h |
| Dichtigkeit (Wassersäule) | 1500 mm |
| Scrubb-Test (1000 Hübe) | ohne |
| trocken/naß | Beschädigung |

b) Auf das unter a) mit der Grundstrichpaste (2.2) grundierte PES-Gewebe wird mit der Deckstrichpaste B) nach 2.4 per Walzenrakel ein 2. Strich aufgebracht. Rakelspalt 0,25 mm, Trocknung und Kondensation 60/60/160° C, Gesamtauflage ca. 40 g Feststoff/m².

| | |
|---|---|
| WDD nach DIN 53 333 | 8 mg/cm².h |
| Dichtigkeit (Wassersäule) | 2000 mm |
| Scrubb-Test (1000 Hübe) | ohne |
| trocken/naß | Beschädigung |

Die nach 2.5a) und 2.5b) hergestellten Artikel zeichnen sich neben hoher Dichtigkeit und hoher Wasserdampfdurchlässigkeit durch fülligen Griff, nach 2.5a) durch besonders trockene Oberfläche mit gutem Gleitvermögen aus.

## Beispiel 3

### 3.1 Herstellung der PUR-Dispersion

850 g eines Polyestercarbonats der OH-Zahl 56 aus $\omega$-Hydroxyhexyl-$\omega'$-hydroxy-capronsäure und Diphenylcarbonat, 400 g eines Polyesters der OH-Zahl 56 aus Hexandiol/Neopentylglykol 65/35 und Adipinsäure, 18 g Butandiol-1,4, 60 g eines monofunktionellen EOX/POX-Polyethers (siehe 2.1) und 21,5 g Dimethylolpropionsäure werden nach dem Trocknen mit 400 g Isophorondiisocyanat bei 60° C vermischt und dann 2 h auf 80° C erhitzt. Nach dem Abkühlen löst man das Prepolymer in 2800 g Aceton. In die acetonische Lösung tropft man eine Lösung von 12 g Ethylendiamin, 7,5 g Hydrazinhydrat und 25 g Ethylendiamin-ß-ethylsulfonsaures Natrium in 500 g Wasser während 45 min bei 25° C. Nach Zugabe von 1675 g Wasser wird das Aceton im Vakuum abdestilliert. Die wäßrige PUR-Dispersion hat ca. 45 % Feststoff.

### 3.2 Herstellung der Grundstrichpaste

550 g der PUR-Dispersion (3.1) werden mit 450 g Terapin® (Shell; Kohlenwasserstoffgemisch vom Siedebereich 155 bis 185° C) verrührt. In diese wäßrig-organische Zubereitung werden 30 g Polyethylenglykollösung (18 %ig in Wasser, Isopropanol) (®Verdioken A, Bayer AG), 20 g einer 30%-igen wäßrigen, acetonhaltigen Dispersion eines Fluoralkylacrylat-Copolymers (Xeroderm® WF, Bayer AG), 20 g eines Polyaziridins (hergestellt aus 1 Mol Pentaerythrit, 3 Mol Acrylsäure und 3 Mol Ethylenimin) und 30 g hydrophiles Polyisocyanat mit einem NCO-Gehalt von ca. 20 % (siehe 1.2) eingearbeitet.

Viskosität: 7000 mPa.s/25° C
Konzentration: ca. 28 %

### 3.3 Herstellung der Deckstrichpaste

7

Zu 1100 g der Grundstrichpaste (3.2) fügt man 20 g einer 50 %igen Lösung eines Polydimethylsiloxans (MG ca. 50 000) in Toluol.
Viskosität: ca 6500 mPa.s/25° C
Konzentration: ca. 28,7 %

### 3.4 Direktbeschichtung auf hydrophobierter Baumwolle

Das hydrophobierte Gewebe wird per Luftrakel mit der Grundstrichpaste (3.2) beschichtet, bei 80/120/160° C getrocknet und kondensiert; Auflage 10 g Feststoff/m². Der 2. Strich (Deckstrichpaste 3.3) wird mittels Walzenrakel aufgebracht und analog getrocknet und kondensiert Gesamtauflage 35 g Feststoff/m².

| WDD nach DIN 53 333 | 7 mg/cm².h |
| Dichtigkeit (Wassersäule) | 2000 mm |
| Scrubb-Test (1000 Hübe) trocken/naß | ohne Beschädigung |

Der Beschichtungsartikel zeichnet sich durch einen besonders eleganten, trockenen Griff aus. Dichtigkeit und Wasserdampfdurchlässigkeit sind wasch- und chemischreinigungsbeständig.

### Beispiel 4

### 4.1 Herstellung der PUR-Dispersion

900 g eines Polycarbonats der OH-Zahl 56 aus Nonandiol und Diphenylcarbonat, 300 g Polytetramethylenglykolether, OH-Zahl 56, 18 g Butandiol-1,4, 25 g Dimethylolpropionsäue, 60 g eines monofunktionellen EOX/POX-Polyethers auf n-Butanol (siehe Beispiel 2.1) werden nach dem Trocknen mit 302 g 1,6-Hexandiisocyanat bei 60° C vermischt und 2 1/2 h auf 80° C erhitzt.
Unter Abkühlen löst man das NCO-Prepolymer in 2800 g Aceton. Zu dieser Lösung tropft man eine Lösung in 18 g Ethylendiamin und 15 g Hydrazinhydrat in 500 g Wasser bei 25 bis 30° C in ca. 45 min. Nach Zugabe von 1960 g Wasser wird das Aceton im Vakuum abdestilliert. Die wäßrige PUR-Dispersion hat eine Konzentration von ca. 40 % Feststoff.

### 4.2 Herstellung der Deckschichtpaste (Transferbeschichtung)

625 g PUR-Dispersion (4.1) werden mit 375 g Sangajol® (Shell) verrührt. In diese PUR-Wasser/Benzin-Dispersion werden 25 g Polyvinylpyrrolidon-Lösung (®Collacral VL, BASF) (30 %ig in Wasser/Aceton 55:15), 20 g Melaminharz (®ACRAFIX MF, BAYER AG.) (50 %ig in Wasser), 15 g einer 50 %igen Lösung eines Polydimethylpolysiloxans (Molgewicht ca. 50 000) in Toluol und 30 g eines hydrophilen Poly isocyanats (siehe 1.2) eingearbeitet. Die Viskosität der Streichpaste beträgt ca. 12 000 mPa.s/25° C; Gesamtfeststoff ca. 28 %.

### 4.3 Transferbeschichtung

a) Auf ein wasserfestes Trennpapier (Wiggins Teape High Light 803 glatt) wird per Walzenrakel, Spalt 0,3 mm, die Deckschichtpaste (4.2) gerakelt. Trocknung und Kondensation 80/120/160° C, Auflage 25 g Feststoff/m².
Als Haftstrich rakelt man die Streichpaste nach (1.2) auf, Spalt 0,35 mm, kaschiert dann ein Baumwoll-Polyestergewebe (150 g/m²) zu, trocknet und kondensiert wie oben. Man erhält einen weichen, fülligen, wasserdampfdurchlässigen Artikel mit trockenem, nappaähnlichem Griff.

| WDD nach DIN 53 333 | 8 mg/cm$^2$.h |
|---|---|
| Dichtigkeit (Wassersäule) | 1200 mm |
| Scrubb-Test (1000 Hübe) | ohne |
| trocken/naß | Beschädigung |

b) Auf Trennpapier, nicht notwendigerweise wasserfestes, wird mit der Streichpaste nach (4.4) per Walzenrakel ein kompakter, wasserdampfdurchlässiger Vordeckstrich appliziert, Auflage 8 g Feststoff/m$^2$.

Der Deck- oder Zwischenstrich wird aus der Paste (4.2) als mikroporöse Schicht erzeugt, Trocknung und Kondensation 80/120/160° C, Auflage 25 g Feststoff/m$^2$; als Haftstrich dient die Paste nach (1.2) in dem das Substrat gemäß (4.3a) nachkondensiert wird.

Man erhält einen trockenen, fülligen, wasserdampfdurchlässigen Artikel hoher Dichtigkeit, Wassersäule >2500 mm, und guter Wasserdampfdurchlässigkeit, 6 mg/cm$^2$.h.

4.4 Herstellung der Vordeckstrichpaste

1120 g eines Polyesters aus Adipinsäure, Hexandiol-1,6 und Neopentylglykol (65:35) der OH-Zahl 56 und 600 g Dihydroxypolyethylenglykol der OH-Zahl 56 und 84 g α,ω-Bishydroxymethyl-polydimethylsiloxan der OH-Zahl 200 werden nach dem Entwässern mit 755 g Isophorondiisocyanat 2 Std. lang auf 100° C erhitzt. Das so erhaltene NCO-Prepolymere wird mit 3460 g Toluol verdünnt. Zu dieser Lösung tropft man bei 25° C eine Lösung von 408 g Isophorondiamin in 3460 g Isobutanol. Man erhält eine 30 %ige Lösung von 25 000 mPa.s/25° C.

Beispiel 5

Auf ein in üblicher Weise nachgegerbtes, gefettetes, gefärbtes und nach Trocknen nachgeschliffenes und ent staubtes Rindspaltleder wird folgende Beschichtung aufgebracht:

Auf ein genarbtes Polyurethan-Trennpapier (z.B. High Light 803, Fa. Wiggins Teape) wird die unter 5.1 angegebene Polyurethanlösung, in üblicher Weise mit 15 % eines handelsüblichen Pigments (z.B. ®BAYDERM Zitron B/TO, BAYER AG.) pigmentiert, und mittels Walzenrakel aufgetragen. Die Feststoffaufla-ge beträgt 25 g/m$^2$.

Auf den trockenen Deckstrich werden 120 g/m$^2$ der in Beispiel 2 dieser Anmeldung unter Punkt 2.2 beschriebenen Streichpaste aufgebracht. Getrocknet wird ansteigend von 60 über 80 bis 110° C, je nach Leistung des Ofens 2 bis 4 Minuten lang. Auf die entstandene mikroporöse Schicht wird als Haftstrich die unter 5.2 beschriebene 30 %ige Polyurethanlösung aufgerakelt. Naßauflage ca. 90 g/m$^2$.

Auf den noch nassen Haftstrich wird das Spaltleder faltenfrei aufgelegt und angedrückt. Getrocknet wird ansteigend von 70 bis 120° C 2 bis 4 min. Nach Abkühlen wird das wasserdampfdurchlässig beschichtete Leder vom Trennpapier abgezogen.

Die Wasserdampfdurchlässigkeit dieses beschichteten Leders betrug 3 mg/cm$^2$.h (DIN 53 333).

5.1 Herstellung der Polyurethanlösung

1320 g eines Polycarbonats aus Diphenylcarbonat und einem Dihydroxylester aus 1 Mol Hexandiol-1,6 und 1 Mol Caprolacton (OH-Zahl:56; MG :2000), 400 g eines auf Ethylenglykol gestarteten Polyethers aus Ethylenoxid (OH-Zahl: 56; MG :ca. 2000) und 84 g eines endständige Hydroxymethylgruppen aufweisenden Dimethylpolysiloxans (MG :600) werden im Wasserstrahlvakuum entwässert und mit 710,4 g 3-Isocyanatomethyl-3,5,5-trimethyl-cyclohexylisocyanat (IPDI) 1,5 h bei 100° C umgesetzt. Das entstandene Isocyanatprepolymer wird in 3370 g Toluol aufgelöst. 374 g 3-Aminomethyl-3,5,5-trimethylcyclohexylamin (IPDA) werden mit 3370 g i-Butanol vermischt; diese Mischung wird langsam der bei ca 25 - 30° C gerührten Prepolymerlösung zugesetzt. Die Viskosität nimmt dabei gegen Ende der Reaktion zu; die Zugabe wird gestoppt, wenn 15.000 mPas überschritten sind. Die Reaktion wird durch Zusatz von Butanonatim beendet. Man erhält eine 30%ige Polyurethanlösung.

EP 0 365 902 A2

5.2 Herstellung der Polyurethanlösung für den Haftstrich

Analog zur Verfahrensweise 5.1 wird ein Polyurethanharnstoff aus folgenden Komponenten hergestellt:
1000 g eines Polycarbonats aus Diphenylcarbonat und einem Dihydroxylester aus 1 Mol Hexandiol-1,6 und 1 Mol Caprolacton (OH-Zahl: 56; MG':2000)
1000 g eines auf Ethylenglykol gestarteten Polyethers aus Ethylenoxid (OH-Zahl: 56; MG : ca. 2000)
732,6 g IPDI
195,5 g IPDA
57,5 g Hydrazinhydrat
3460 g Toluol und
3460 g i-Butanol
Die Viskosität der 30%-igen Lösung beträgt etwa 20.000 mPas.

**Ansprüche**

1. Beschichtungsmassen, die
a) 20 bis 90 Gew.-% 20 bis 60 gew.-%ige wäßrige Dispersionen von Polyurethanen mit end- und/oder seitendständigen Carboxylat- und/oder Sulfonat-Gruppen und/oder Polyetherketten mit Oxyethylen-Einheiten,
b) 0,1 bis 5 Gew.-% wasserlösliche, polymere Nicht-Polyurethane, die frei von Carboxyl-Gruppen sind, als Vedicker für PUR-Dispersionen,
c) 3 bis 80 Gew.-% mit Wasser nicht mischbare organische Lösemittel mit Siedepunkten/-bereichen bis 250° C, bevorzugt bis 220° C, als Nichtlöser für die in Wasser dispergierten Polyurethane,
d) 0,1 bis 5 Gew.-% isocyanatgruppenfreie Vernetzer für die in Wasser dispergierten Polyurethane,
e) 0,1 bis 5 Gew.-% hydrophile Polyisocyanate als Haftvermittler zum Substrat und als Vernetzer der Polyurethane in den PUR-Dispersionen und gegebenenfalls übliche Beschichtungshilfsmittel und -zusatzstoffe enthalten,
wobei die Summe der Prozentanteile a) + b) + c) + d) + e) 100 beträgt.
2. Beschichtungsmassen gemäß Anspruch 1, die a) 35 bis 45 gew.-%ige wäßrige PUR-Dispersionen enthalten.
3. Beschichtungsmassen gemäß Anspruch 1 oder 2, die 25 bis 70 Gew.-% c) enthalten.
4. Beschichtungsmassen gemäß einem oder mehreren der Ansprüche 1 bis 3, die 1 bis 3 Gew.-% e) enthalten.
5. Beschichtungsmassen gemäß einem oder mehreren der Ansprüche 1 bis 4, die 40 bis 70 Gew.-% a) enthalten.
6. Beschichtungsmassen nach einem oder mehreren der Ansprüche 1 bis 5, dadurch gekennzeichnet, daß die wasserlöslichen, polymeren Nicht-Polyurethane Polyvinylpyrrolidon(misch)polymere und/oder Polyethylenglykole sind.
7. Beschichtungsmassen nach einem oder mehreren der Ansprüche 1 bis 6, dadurch gekennzeichnet, daß die mit Wasser nicht mischbaren organischen Lösemittel mit Siedepunkten/-bereichen bis 250° C, bevorzugt bis 220° C, Nichtlöser für Polyurethane in wäßrigen Dispersionen, aromatische und/oder aliphatische Kohlenwasserstoffe, insbesondere Benzinfraktionen sind.
8. Beschichtungsmassen nach einem oder mehreren der Ansprüche 1 bis 7, dadurch gekennzeichnet, daß die Vernetzer für die Polyurethane blockierte Polyisocyanate, Harnstoff- und/oder Melaminharze und/oder Polyepoxide und/oder Polyaziridine und/oder Polycarbodiimide sind.
9. Beschichtungsmassen nach einem oder mehreren der Ansprüche 1 bis 8, dadurch gekennzeichnet, daß die wasserverträglichen Polyisocyanate als Haftvermittler zum Substrat und als Vernetzer der Polyurethane hydrophile Polyisocyanate mit einem NCO-Gehalt von 5-30%, bevorzugt von 15 - 20%, aus aliphatischen und/ oder cycloaliphatischen Polyisocyanaten bzw. Isocyananurat- und Biuretpolyisocyanaten daraus, umgesetzt mit EOX/POX-Polyethern, deren EOX-Anteil mindestens 50, bevorzugt mehr als 70 Gew.-% beträgt, sind.
10. Verwendung der Beschichtungsmassen gemäß einem oder mehreren der Ansprüche 1-9 zur Herstellung von wasserdampfdurchlässigen Beschichtungen auf Textil-oder Ledersubstraten im Direkt- oder Transferverfahren nach dem Prinzip der Verdampfungskoagulation.

10